# EUROPEAN PATENT APPLICATION

(11) **EP 4 012 523 A1**
(43) Date of publication of application: **15.06.2022**
(21) Application number: 20213128.0
(22) Date of filing: 10.12.2020
(51) Int. Cl.: G05B 19/418, G05B 23/02, G06N 3/04

(54) **MONITORING INDUSTRIAL EQUIPMENT WITH AT LEAST ONE ROTATING MEMBER**

(71) Applicant: ABB Schweiz AG, 5400 Baden (CH)
(72) Inventor: SCHMIDT, Benedikt, 69117 Heidelberg (DE); SOSALE, Guruprasad, 80997 München (DE); SUBBIAH, Subanatarajan, 68809 Neulußheim (DE); GITZEL, Ralf, 68165 Mannheim (DE); SPOORENDONK, Jonas, 76646 Bruchsal (DE)
(74) Representative: Maiwald Patent- und Rechtsanwaltsgesellschaft mbH

(57) **Abstract**

A method (100) for monitoring an equipment (1) with at least one rotating member, comprising the steps of:
• recording (110), by at least one sensor (2), at least one sample (3) of noise and/or vibration generated by the equipment (1) in the time domain;
• obtaining (120) at least one representation (3') of the at least one sample (3) in the frequency domain;
• obtaining (125) information (7) that is indicative at least of the type of the equipment (1);
• selecting (126), based on this information (7), one model (4a-4c) of the equipment (1) from a plurality of available models (4a-4c); and
• mapping (130), by means of the selected model (4a-4c), the at least one representation (3') to an operating state (5) of the equipment, wherein said operating state comprises a normal state, an abnormal state, a fault, and/or a degradation state (5).

## Description

### FIELD OF THE INVENTION

The present invention relates to the monitoring of industrial equipment with at least one rotating member, such as pumps and other equipment driven by electric motors.

### BACKGROUND OF THE INVENTION

Industrial equipment with moving parts is inevitably subject to wear and tear. For example, in centrifugal pumps, the impeller exerts mechanical forces on the pumped medium in order to pass it through the pump and increase its pressure. If a pump fails without sufficient advance notice, this may cause shutdown of the entire plant comprising the pump. The cost of this shutdown may be much higher than the mere cost of repairing or replacing the pump.

EP 2 505 847 A1 discloses a method to determine the wear of a pump. Based on the operating parameters of the pump, a theoretical flow of medium through the pump is calculated. This theoretical flow is compared to an actual measured flow. If there is a difference between the flows, this indicates degradation of the pump.

### OBJECTIVE OF THE INVENTION

It is an objective of the present invention to permit the monitoring of a broader class of industrial equipment with rotating members, and to allow a more specific detection of abnormal states, faults and/or degradation states.

This objective is achieved by the method according to the independent claim. Further advantageous embodiments are detailed in the dependent claims.

### DISCLOSURE OF THE INVENTION

The invention provides a method for monitoring an equipment with at least one rotating member. The equipment may, for example, comprise one or more pumps, or any other rotating member driven by an electric motor.

The method starts with recording, by at least one sensor, at least one sample of noise and/or vibration generated by the equipment. This recording is performed in the time domain. I.e., a measurement quantity that is a measure for an amplitude, intensity or other magnitude of the noise and/or vibration is recorded over time. The sensor, for example, be associated and/or fixed to a particular piece of equipment. However, this is not required. Rather, for example, an acoustic sensor may monitor a floor with multiple pieces of equipment and optionally also attribute sound to a particular direction from which it is coming.

In particular, the recording itself may run continuously, but samples across certain time intervals may be fed to the detection according to any suitable schedule.

At least one representation of the at least one sample in the frequency domain is obtained. In this manner, the representation indicates some sort of magnitude with which different frequencies or ranges of frequencies are present in the sample. Transformation into the frequency domain may, for example, be performed using Fast Fourier Transform, FFT, or Short Term Fourier Transform, STFT.

Information that is indicative at least of the type of the equipment (e.g., pump, stirrer, conveyor belt or shredder) is obtained. Based on this information, one model of the equipment, one model of the equipment is selected from a plurality of available models. By means of the selected model, the at least one representation is mapped to an operating state of the equipment. This operating state comprises a normal state, an abnormal state, a fault, and/or a degradation state of the equipment. Here, the term "model" may in particular denote any description or representation of the equipment, or proxy for the equipment, that links noise or vibration to particular faults and/or degradation states. In particular, such a model may comprise some level of abstraction of the physical processes that govern the occurrence of particular faults and/or degradation states, and that also govern the generation of noise and/or vibration by virtue of the fault and/or degradation state while the equipment is operating. Such abstraction may in particular be a simplification that makes inferring faults and/or degradation states from noise and/or vibration more tractable. The model may also be a machine-learning model that has inferred at least some knowledge about said physical processes during the processing of training examples. Such training may be performed in a supervised manner using training examples of representations of samples for which a correct fault and/or degradation state ("ground truth") is known. Alternatively, training may be performed in an unsupervised manner by clustering representations of samples. Such clustering infers which of the samples are related somehow. Clustering may, for example, be performed as "k-means clustering" where the representations are grouped into a predetermined number of k clusters. Alternatively or in combination, the model may be a "digital twin" of the equipment that mimics the behavior of the equipment.

A normal state may specifically comprise a state where the equipment is operating in the way it is intended to operate according to a predetermined specification. In particular, such a specification may, for example, comprise ranges of state variables or other operating parameters. If the equipment operates within these ranges, operation is deemed to be normal. Likewise, an abnormal state may specifically comprise a state where one or more of these ranges, or any other condition to which the presence of a normal state is tied, is violated.

A fault may specifically comprise a condition that prevents the equipment from fulfilling some or all of its intended functionality. For example, if a pump is unable to deliver a certain quantitative mass flow even though it is specified to deliver this mass flow, this constitutes a fault.

A degradation state may specifically comprise a condition of the equipment or any part thereof that is worse than in the mint condition of the equipment and that may become detrimental to the operation, and/or to the life, of the equipment. In particular, a degradation state may build up gradually and have a potential to escalate into a fault if not remedied by means of maintenance. Typically, a degradation state is no temporary condition that may disappear on its own. Rather, it is usually a condition that, on its own, only stays constant or worsens, so the only way to improve it again is maintenance.

A degradation state may, for example, comprise
- deformation and/or partial loss of material of the equipment (1) or any part thereof; and/or
- buildup of material deposits on the equipment or any part thereof.

For example, deformation and/or partial loss of material may be the result of cavitation, corrosion, and/or mechanical wear. For example, buildup of material deposits may be the result of fouling or another ingress of contaminants into the equipment.

Training of a model may, in particular, be performed on training examples gathered across a large fleet of identical pieces of equipment. Many pieces of equipment with rotating members, such as pumps, are manufactured and sold in large numbers to be used in various types of plants. Even though the uses to which the individual instances of the equipment will be put may differ greatly, the generation of noise and/or vibration in case of faults and/or degradation will be more or less the same. There will be only relatively small differences, e.g., due to the absorption of vibration and/or noise by other equipment to which the equipment in question is attached. Also, other equipment may introduce a background vibration, and/or a background noise.

In particular, using one model per type of equipment, rather than one model per piece of equipment, has the effect that when starting from a given finite set of training examples, each model receives more of these training examples for its training. The training data set that each model receives has a greater variability, which improves the generalization power of the model, i.e., the power to handle unseen situations that have not been part of the training. As a consequence, after training, each model is able to more accurately predict the operating state of a particular type of equipment based on a representation of a noise sample and/or a vibration sample. This benefit outweighs the inaccuracy that results from the simplifying assumption that all pieces of equipment of a particular type behave equally and according to one and the same model.

Training examples may be collected in an unlabeled form first, to be labelled later. For example, a lot of noise and/or vibration samples may be collected without yet knowing whether they indicate a fault and/or a degradation. Later, during maintenance or after a failure of the equipment, it may be discovered that a fault and/or degradation was in fact present in the piece of equipment, and the training examples gathered on this piece of equipment may be labelled accordingly. For example, a piece of equipment that has failed may be disassembled to find the root cause, and this may be associated with sound and/or vibration samples taken during the time while the equipment was still operating.

Many changes from a normal operating state of equipment to an abnormal state, and in particular to faults and/or degradation states, cause at least some mechanical dimensions, and/or moments of inertia, in the equipment to deviate from their ideal state. When the rotating member rotates, this deviation from the ideal state will cause vibration and/or noise to be generated.

For example, if the rotating member is deformed somehow, or if some fouling is attached to it, it will no longer be fully symmetric with respect to its axis of rotation. The rotating member will be out-of-balance, so that the rotation will cause a periodic mechanical force to be exerted on the bearing. This periodic force will generate noise and/or vibration.

Also, mechanical dimensions that are amiss may cause the rotating member to hit another member, or to scrape against another member. Both actions will generate noise and/or vibration as well.

From the nature of the noise and/or vibration, which can be analyzed particularly well in the frequency domain, the nature of the fault and/or degradation state may be inferred. This may then be reported to the operator of the plant, and appropriate corrective action may be taken.

Also, the possibility to determine a fault and/or degradation state more accurately opens up the possibility to predict what may happen to the equipment in the future if it continues operating. For example, the finding that an out-of-balance rotating member is present may give reason to the prediction that a failure of the overtaxed bearing will fail if the equipment continues to be operated.

As discussed above, it is advantageous to group fleets of pieces of equipment by type of equipment and use one model per type, rather than one model per piece of equipment. Therefore, in a particularly advantageous embodiment of the monitoring method, multiple pieces of equipment within one single industrial plant are monitored. For mapping representations of samples obtained on a first non-empty subset of the pieces of equipment to an operating state, a first model is selected. For mapping representations of samples obtained on a second non-empty subset of the pieces of equipment to an operating state, a second model is selected. This second subset is disjoint from the first subset. For example, the first subset may correspond to a first type of equipment, and the second subset may correspond to a second type of equipment.

In a particularly advantageous embodiment, the representation comprises a compressed signature of the sample. In particular, "compressed" may mean that the size of the signature is greatly reduced compared with the original sample. The effect of this is two-fold. First, the amount of data in the signature is reduced, so the mapping by means of the model is less resource-intensive. Second, differences between samples that are caused by the not exact reproducibility of the measurement process are levelled. When two samples of the same constant operating situation are acquired in direct succession, they will typically not be bit-identical. But the compressed signatures generated from the two samples will be much more similar than the samples themselves.

In particular, the compressed signature may comprise statistical parameters of the sample. For example, the sample may be decomposed into any sort of moments or other statistical constituents by means of principal component analysis, PCA, linear discriminant analysis, LDA, or any other suitable statistical analysis method.

Alternatively or in combination, the compressed signature may comprise a breakdown of the overall spectral intensity of the sample into intensities of predetermined frequency bins. This is a compressed representation of how the noise and/or vibration varies with frequency. The breakdown may, for example, be computed using Fourier transformation, wavelet transformation, or any other suitable transformation from the time domain into the frequency domain. The individual bins may have equal widths on the frequency axis, but they may, for example, also have smaller widths in particularly salient frequency ranges.

In an advantageous embodiment, the model of the equipment comprises a collection of reference compressed signatures that are each stored in association with an operating state, such as a fault and/or a degradation state, of the equipment. In this manner, if this reference compressed signature is detected in the compressed signature obtained from the measured sample, it may be inferred that the operating state stored in association with this reference compressed signature is present in the equipment in the state in which the sample was acquired. It is also possible that multiple reference signatures are detectable in one single compressed signature. This may indicate that multiple faults and/or degradations as operating states are present at the same time. For example, if a first fault and/or degradation initially occurs, continued operation of the equipment may cause the state of the equipment to worsen, so that a second fault and/or degradation develops. For example, the out-of-balance mass of the rotating member may overtax the bearing during continued high-speed rotation, resulting in damage to the bearing.

One exemplary way of detecting a reference signature in the compressed signature is to supply the compressed signature from the representation on the one hand, and at least one reference compressed signature stored in the model on the other hand, to a distance measure and/or similarity measure. The outcome of this distance measure and/or similarity measure may then be evaluated according to any suitable predetermined criterion, such as the meeting of a certain predetermined threshold value. If the criterion is met, it is determined that the fault and/or degradation state stored in the model in association with the reference compressed signature is present in the equipment.

In particular, at least one reference compressed signature may be a cluster centroid obtained by unsupervised clustering of compressed signatures. When a large set of signatures forms a certain number of clusters, the "barycenter" of each such cluster may be understood to be the centroid of this cluster. This centroid need not correspond to any actual signature that belongs to this cluster.

Some operating states, and in particular faults and/or degradation states, may be more evident from the change of the behavior of the equipment over time than from a state of the equipment at any one time alone. Therefore, in a further particularly advantageous embodiment, the mapping of the at least one representation to the operating state comprises:
- determining, from multiple representations corresponding to samples recorded at different times, a change of the noise and/or vibration over time; and
- mapping, by means of the model, this change to the operating state.
This means that the model may, alternatively or in addition to being configured to accept representations of samples, be configured to accept changes of the noise and/or vibration, or representations thereof.

In a particularly advantageous embodiment, the model comprises at least one neural network that is configured map the representation, and/or the change, to a classification that is indicative of the operating state. Neural networks have a very good potential for generalization. This means that knowledge extracted from a finite number of training examples may be applied to an infinite number of unseen situations.

In a further particularly advantageous embodiment, the method further comprises determining, from an operating state obtained by the mapping that is different from a predetermined normal state, at least one remedial action. A remedial action is an action that, when performed on the equipment that has the non-normal operating state or on other equipment, is suitable to at least partially move the equipment with the fault and/or degradation state to a predetermined normal operating state, and/or inhibit a further degradation of this equipment. Also, the method comprises causing execution of this remedial action on the equipment with the non-normal operating state, respectively on the other equipment.

The remedial action may, for example, be determined based on a set of rules. Such rules may, for example, map a concrete operating state or combination of operating states to a particular remedial action. Such rules may, for example, be based on a priori knowledge which remedial action helps in which situation.

Alternatively or in combination, an operating state of combination of operating states may, for example, be mapped to one or more remedial actions by means of another machine-learning model, such as a "breakdown model". Such a model may, for example, be trained on past experience regarding which actually attempted remedial actions have helped (or have not helped) to remedy certain abnormal operating states in the past. In this manner, the intuitive capabilities of plant operators who have manually led the plant through unexpected abnormal situations.

The remedial action may, for example, comprise changing the rotational speed of the rotating member of the equipment to a new value that eases a mechanical demand on the equipment. In many situations, such mechanical demand generally increases with the rotational speed. For example, if the rotating member is out-of-balance, the forces exerted by the rotating member on the bearing increase as the rotational speed increases. But there may also be situations where increasing the rotational speed may decrease the mechanical demand. For example, if the current abnormal situation triggers a resonance phenomenon and some member or part of the equipment is excited at or near its eigenfrequency, more and more energy is pumped into the amplitude of the vibration, which may be very damaging to the equipment. Increasing the rotational speed may move the excitation off the eigenfrequency, so that the escalation of the vibration amplitude may be stopped.

In another example, other equipment may be actuated to take over at least one action from the equipment with the non-normal operating state. In many plants, there is a certain redundancy of equipment, so if two pieces of equipment work together to deliver the same service, and there is a demand for more of this service, it is better to increase the demand on the healthy piece of equipment than to increase the demand on the one that already has a fault and/or degradation state. Maxing out the piece of equipment that is already faulty and/or degraded might worsen the condition of this piece of equipment, causing it to fail completely.

In one prime example, the equipment is a pump in a set of parallel pumps. Parallel pumps work together to deliver a certain mass flow of media, and/or to raise the pressure of media to a certain value. In most operating states, not all pumps need to be run at their maximum power. So if one pump has a fault and/or degradation, it may be advantageous to go easy on that pump and demand more from the other pumps.

For example, the remedial action may specifically comprise: in response to a request to change the flow and/or the pressure of a medium that is output by the set of pumps, keeping the rotational speed of the pump with the non-normal operating state constant, and satisfying the request for the change of flow and/or pressure by changing the rotational speed of at least one other pump. The reason behind this is that changes to the rotational speed are situations that place the highest demands on a pump.

The mentioned remedial measures, as well as for other remedial measures, may be applied with any suitable goal in mind. For example, a goal may be to keep the equipment working at least for a certain predetermined time, until a time window arrives where repairs are most convenient. This may, for example, be a time window where taking the equipment out of service causes the least economic damage, or where it is convenient to physically reach the equipment for repair.

For example, if a pump in a set of parallel pumps begins to falter on Tuesday, it may be advantageous to go at least so easy on this pump that it will keep working until the weekend, where there is less demand on the set of pumps as a whole and it will not be noticed that one pump is not in service.

In another example, if the equipment is part of a wind turbine generator (especially offshore), it may be particularly costly to visit this equipment for repairs. So if a fault or degradation occurs, it may be desirable to keep the equipment working until a repair can be bundled with other planned repairs.

The invention also provides a method for training a plurality of machine-learning models for use in the monitoring method described above.

This method starts with obtaining representations, in the frequency domain, of noise and/or vibration samples generated by multiple pieces of equipment. Each such piece of equipment comprises at least one rotating member. In addition, for each piece of equipment, information that is indicative at least of a type of the equipment is obtained. According to this information, each available representation is assigned to one to-be-trained machine-learning model from a plurality of available models. That is, the available amount of training representations is distributed across the available models.

An operating state of the equipment is assigned to each representation. This operating state comprises a normal state, an abnormal state, a fault, and/or a degradation state. In a broadest sense, the assigning of operating states to representations corresponds to a "labelling" of the representations with these operating states, but it does not strictly require "ground truth" in the form of labels to be present. Rather, the assigning of operating states to representations may also be performed in an unsupervised manner.

For each to-be-trained model, parameters that characterize the behavior of this model are optimized such that the model maps representations assigned to this model to the respective operating states assigned to these representations. That is, the different available models are trained independently of each other.

As discussed before, the grouping of the available training representations according to types of equipment has the effect that each model is being trained with a large set of representations that has a maximum variability. Therefore, each model will have a high power to generalize to unseen situations. For each type of equipment, the behaviors of the individual pieces of equipment belonging to this type are sufficiently similar, so that they may all share their learning experiences.

In a particularly advantageous embodiment, in the course of assigning an operating state to a representation, the representations are clustered into a plurality of clusters. Different operating states are assigned to different clusters. Each representation is then assigned the operating state belonging to the cluster of which this representation is a member.

The number of clusters may, for example, be pre-set ("k-means clustering"). For example, if two clusters are established, a very large number of representations are members of the first cluster, but only a quite small number of representations are members of the second cluster, this may already indicate that the first cluster corresponds to a normal operating state, while the second cluster corresponds to an abnormal operating state. The reason is that during production use of the equipment, at any one time, a normal operating state is far more probable than an abnormal operating state.

In another advantageous embodiment, one single cluster may be derived from the representations. A normal operating state may be assigned to the representations that are members of this cluster. An abnormal operating state may be assigned to the representations that are not members of this cluster. This is particularly suitable for the binary decision whether an operating state of a piece of equipment is normal or abnormal.

Another advantageous way to train machine-learning models for this binary decision involves the use of auto-encoders. In this embodiment, a trainable encoder is provided. This trainable encoder is configured to map representations to latent codes in a latent space with reduced dimensionality. Also, a trainable decoder is provided. This trainable decoder is configured to reconstruct representations from latent codes in the latent space.

Using a set of available representations, the encoder and the decoder are trained with the goal that, if representations are first mapped to latent codes by the encoder and then reconstructed by the decoder, the original representations are reproduced. Because the latent codes have a much lower dimensionality, the representation needs to be compressed to a fixed amount of information, and the encoder learns to carefully choose this information to be the one that is most salient for the reconstructing by the decoder. If a large number of representations is inputted during training, most of them will indicate a normal operating state. Therefore, the encoder will learn to encode mostly information that indicates a normal operating state into the latent codes. But the encoder will be less trained to encode representations that indicate abnormal situations such that they are well reconstructed by the decoder. This may be used to distinguish normal operating states from abnormal operating states.

To assign an operating state to a concrete representation, this concrete representation is mapped to a latent code with the trained encoder and reconstructed with the trained decoder. According to a predetermined criterion, it is evaluated whether the reconstructed representation matches the original concrete representation that was inputted into the trained encoder.

If the reconstructed representation matches the original concrete representation, a normal operating state is assigned to this concrete representation. If the reconstructed representation does not match the original concrete representation, an abnormal operating state is assigned to this concrete representation. The boundary between "matching" and "not matching" is defined by said predetermined criterion.

No matter which training method is used, an operating history of the equipment may be exploited for operating states that may be assigned to representations. In this manner, for example, information about the operating state that is only evident from a consideration of a certain stretch of operating history may be exploited. For example, if some measurement quantity shows an exponential trend even though the rotating equipment should nominally operate in a stationary state, this may be taken as an indication that the operating state of the equipment is abnormal.

Therefore, in a further advantageous embodiment, from an operating history of the equipment on which the sample condensed in the representation was taken, an operating state of the equipment is determined. This operating state is assigned to the representation.

Since most equipment may be at least partially monitored, actuated and/or controlled by computer, the invention may be embodied in a software. The invention therefore also provides a computer program with machine-readable instructions that, when executed on one or more computers, cause the one or more computers to perform a method as described above. The invention also provides a non-transitory machine-readable storage medium, and/or a download product, with the computer program. A download product is a product that may be sold in an online shop for immediate fulfillment by download. The invention also provides one or more computers with the computer program, and/or with the non-transitory machine-readable storage medium and/or download product.

### DESCRIPTION OF THE FIGURES

In the following, the invention is illustrated using Figures without any intention to limit the scope of the invention. The Figures show:
Figure 1: Exemplary embodiment of the method 100 for monitoring an equipment 1 with at least one rotating member;
Figure 2: Exemplary embodiment of a compressed signature 3" of a sample 3 of noise and/or vibration;
Figure 3: Two exemplary degradation states of a pump 10 as equipment 1;
Figure 4: Exemplary embodiment of the training method 200.

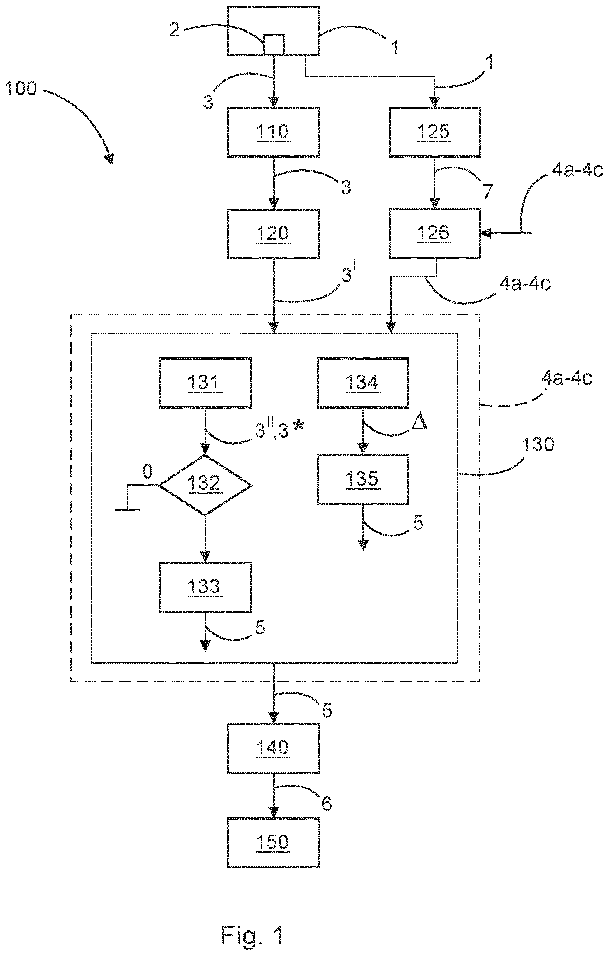

Figure 1 is a schematic flow chart of an embodiment of the method 100 for monitoring an equipment 1 with at least one rotating member. The to-be-monitored equipment 1 has a sensor with which samples 3 of noise and/or vibration may be recorded. This recording is performed in step 110.

In step 120, at least one representation 3' of the at least one sample 3 in the frequency domain is obtained. In step 125, information 7 that is indicative at least of the type of the equipment 1 is obtained. Based on this information, one model 4a-4c is selected from a plurality of available models 4a-4c. In step 130, by means of the selected model 4a-4c, the at least one representation 3' is mapped to an operating state 5 of the equipment 1. This operating state 5 comprises a normal state, an abnormal state, a fault, and/or a degradation state, of the equipment 1.

A discovered non-normal operating state 5b may be used in step 140 to determine a remedial action 6, which may then be applied to the equipment 1, or to another equipment working together with this equipment 1. The goal of this remedial action 6 is to keep the equipment 1 working at least partially and at least until a predetermined time when the non-normal operating state 5b may be causally addressed by means of maintenance and/or repair. That is, the remedial action 6 is suitable to at least partially move the equipment 1 with the non-normal operating state 5b to the predetermined normal operating state 5a, and/or inhibit a further degradation of this equipment 1.

Inside box 130, two exemplary manners for mapping the representation 3' to an operating state 5 of the equipment 1 are shown.

According to block 131, a compressed signature 3" from the representation 3' on the one hand, and a reference compressed signature 3* stored in the model 4a-4c on the other hand, are supplied to a distance measure and/or similarity measure. In block 132, it is checked whether the outcome of this distance measure and/or similarity measure meets a predetermined criterion. If this criterion is met (truth value 1), the operating state 5 stored in the model 4a-4c in association with the reference compressed signature 3* is determined as an operating state 5 of the equipment 1. As discussed before, the equipment 1 may have multiple operating states 5, e.g., multiple faults and/or degradations, at any one time.

According to block 134, a change Δ of the noise and/or vibration over time is determined from multiple representations 3' corresponding to samples 3 recorded at different times. According to block 135, this change Δ is then mapped to an operating state 5 of the equipment 1.

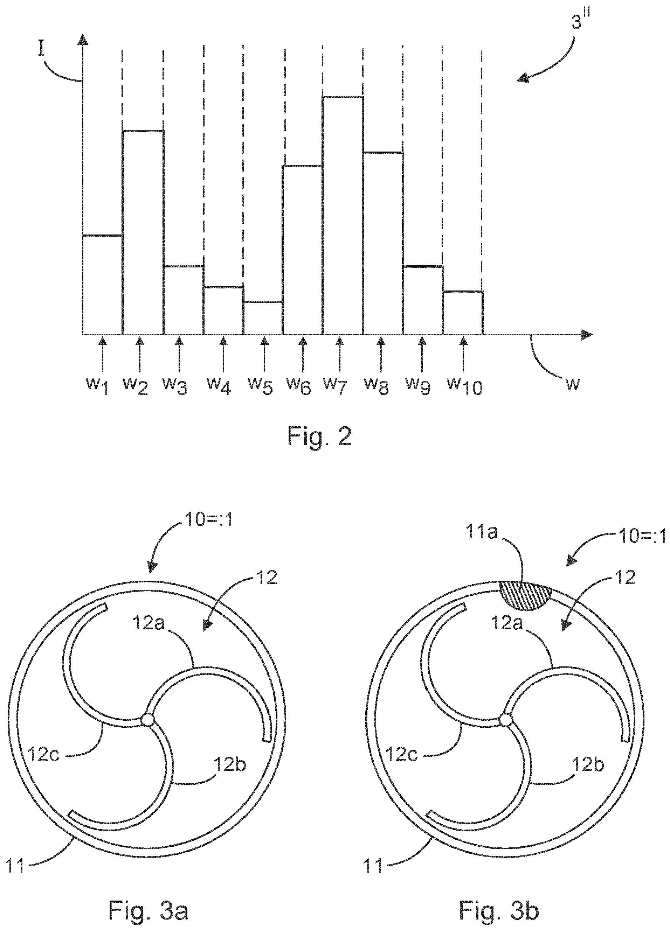

Figure 2 shows an exemplary compressed signature 3" of a representation 3' of the at least one sample 3 in the frequency domain. The representation 3', which is not shown in Figure 2, is a Fourier spectrum of the sample 3. The overall spectral intensity of the sample 3 is broken down into intensities I of predetermined frequency bins ω₁-ω₁₀ into which the frequency axis ω is divided. In the example shown in Figure 2, a fairly complex spectrum may be compressed into a vector of just ten numbers that may then be evaluated further for the operating state 5 of the equipment 1.

Figure 3 shows two exemplary degradation states as operating states 5 of a pump 10 that may serve as equipment 1. The pump 10 has a housing 11 and an impeller 12 that is arranged concentrically within the housing 11. The impeller 12 has three vanes 12a-12c that propel a flow of a pumpable medium when the impeller rotates about its axis.

In the example shown in Figure 3a, some material has broken off at the outer end of the vane 12b of the impeller 12. This causes the mass distribution of the impeller 12 to be no longer symmetrical with respect to the axis of rotation. The mass of the impeller 12 is out-of-balance. When the impeller 12 rotates, this will cause periodic forces to be applied to the bearing that supports the impeller 12. This may give rise to noise and/or vibration.

In the example shown in Figure 3b, fouling 11a has accumulated on the inner circumference of the housing 11. When the impeller 12 rotates, the fouling 11 a will get in the way of the vanes 12a-12c of the impeller 12. When the vanes 12a-12c strike the fouling 11a, this will cause noise and/or vibration again.

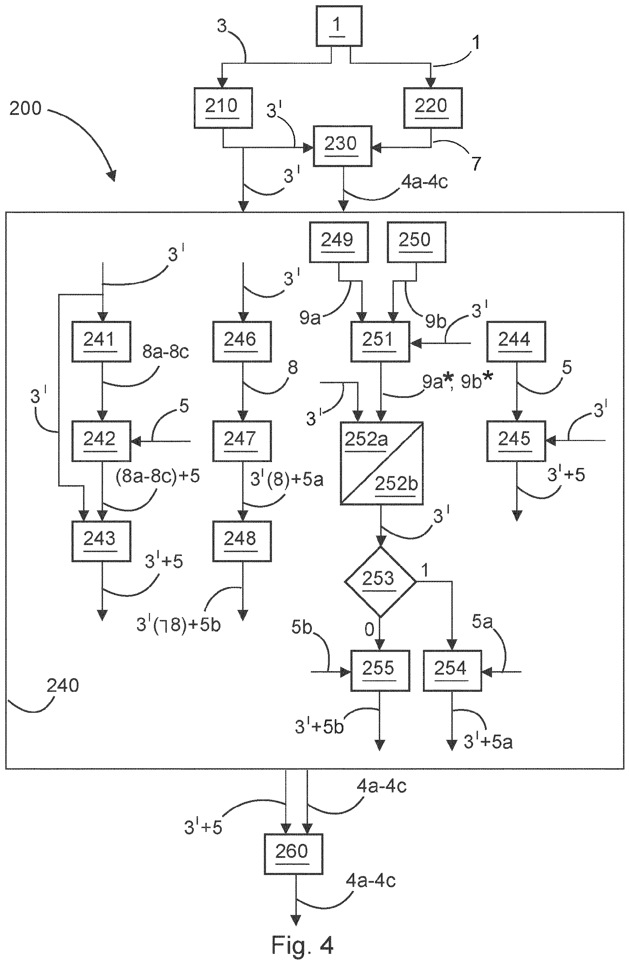

Figure 4 is a schematic flow chart of an exemplary method of the method 200 for training machine-learning models 4a-4c for use in the method 100 described before.

In step 210, representations 3' of noise and/or vibration samples 3 in the frequency domain are obtained. The samples 3 have been generated by multiple pieces of equipment 1. Each piece of equipment 1 comprises at least one rotating member.

In step 220, for each piece of equipment 1, information 7 that is indicative at least of a type of the equipment 1 is obtained. Based on this information, in step 230, each representation 3' is assigned to one to-be-trained machine-learning model 4a-4c from a plurality of available models 4a-4c.

In step 260, for each to-be-trained model 4a-4c, parameters that characterize the behavior of this model 4a-4c are optimized such that the model 4a-4c maps representations 3' assigned to this model 4a-4c to the respective operating states 5 assigned to these representations 3'.

Inside box 230, multiple exemplary ways are shown how an operating state 5 may be assigned to a representation 3'.

According to block 241, the representations 3' may be clustered into a plurality of clusters 8a-8c. According to block 241, different operating states 5 may be assigned to different clusters 8a-8c. According to block 243, the operating state 5 belonging to the cluster 8a-8c of which a representation 3' is a member may be assigned to this representation 3'.

According to block 246, one single cluster 8 may be derived from the representations 3'. According to block 247, representations 3' that are members of this cluster 8 may be assigned a normal operating state 5a. According to block 248, representations 3' that are not members of this cluster 8 may be assigned an abnormal operating state 5b. According to block 249, a trainable encoder 9a may be provided. This trainable encoder 9a is configured to map representations 3' to latent codes in a latent space with reduced dimensionality. According to block 250, a trainable decoder 9b may be provided. This trainable decoder 9b is configured to reconstruct representations 3' from latent codes in the latent space. According to block 251, the encoder 9a and the decoder 9b are trained using a set of available representations 3'. The goal of this training is that if representations 3' are first mapped to latent codes by the encoder 9a and then reconstructed by the decoder 9b, the original representations 3' are reproduced. The result of the training comprises the trained encoder 9a* and the trained decoder 9b*.

According to block 252a, the trained encoder 9a* may now map a concrete representation 3' to a latent code, and from this latent code, the representation 3' may be reconstructed using the trained decoder 9b* according to block 252b. It may then be evaluated according to block 253, according to a predetermined criterion, whether the reconstructed representation 3' matches the original concrete representation 3'.

If the reconstructed representation 3' matches the original concrete representation 3' (truth value 1), a normal operating state 5a may be assigned to this concrete representation 3' according to block 254.

If the reconstructed representation 3' does not match the original concrete representation 3' (truth value 0), an abnormal operating state 5b may be assigned to this concrete representation 3' according to block 255.

According to block 244, an operating state 5 of the equipment 1 may be determined from an operating history of the equipment 1 on which the sample 3 condensed in the representation 3' was taken. According to block 245, this operating state 5 may be assigned to the representation 3'.

### List of reference signs

- 1: equipment to be monitored
- 2: sensor
- 3: sample of noise and/or vibration
- 3': representation of sample 3 in frequency domain
- 3": compressed signature of sample 3 in representation 3'
- 3*: reference compressed signature in model 4
- 4a-4c: model of equipment 1
- 5: operating state of equipment 1, e.g., fault and/or degradation
- 5a: normal operating state 5
- 5b: abnormal operating state 5
- 6: remedial action
- 7: information indicative of the type of equipment 1
- 8: one singe cluster for representations 3'
- 8a-8c: multiple clusters for representations 3'
- 9a: trainable encoder for representations 3'
- 9a*: trained state of encoder 9a
- 9b: trainable decoder for latent codes of representations 3'
- 9b*: trained state of decoder 9b
- 10: pump as equipment 1
- 11: housing of pump 10
- 11a: fouling on housing 11
- 12: impeller of pump 10
- 12a-12c: vanes of impeller 12
- 100: method for monitoring equipment 1
- 110: recording sample 3
- 120: obtaining representation 3' of sample 3 in frequency domain
- 125: obtaining information 7 indicative of type of equipment 1
- 126: selecting one model 4a-4c from plurality of available models 4a-4c
- 130: mapping representation 3' to fault and/or degradation state 5
- 131: supplying signature 3" and reference 3* to similarity/distance measure
- 132: checking outcome of similarity/distance measure against criterion
- 133: determining that fault/degradation state 5 from model 4a-4c is prevalent
- 134: determining change Δ over time
- 135: mapping change Δ to fault and/or degradation state 5
- 140: determining remedial action 6
- 150: performing remedial action 6
- 200: method for training multiple machine-learning models 4a-4c
- 210: obtaining representations 3'
- 220: obtaining information indicative of the type of equipment 1
- 230: assigning representation 3' to one model 4a-4c
- 240: assigning an operating state 5 to each representation 3'
- 241: clustering representations 3' into clusters 8a-8c
- 242: assigning operating states 5 to clusters 8a-8c
- 243: assigning operating states 5 of clusters 8a-8c to members 3'
- 244: determining operating states 5 from operating history
- 245: assigning operating states 5 to representations 3'
- 246: deriving one cluster 8 from representations 3'
- 247: assigning normal operating state 5a to member representations 3'
- 248: assigning abnormal operating state 5b to non-member representations 3'
- 249: providing trainable encoder 9a
- 250: providing trainable decoder 9b
- 251: training encoder 9a and decoder 9b
- 252a: mapping concrete representation 3' to latent code
- 252b: reconstructing representation 3' from latent code
- 253: determining whether representation 3' reconstructed correctly
- 254: assigning normal operating state 5a if reconstructed correctly
- 255: assigning abnormal operating state 5b if not reconstructed correctly
- 260: training machine-learning models 4a-4c
- I: intensity
- Δ: change of noise and/or vibration over time
- ω: frequency
- ω₁-ω₁₀: frequency bins

## Claims

1. A method (100) for monitoring an equipment (1) with at least one rotating member, comprising the steps of:
• recording (110), by at least one sensor (2), at least one sample (3) of noise and/or vibration generated by the equipment (1) in the time domain;
• obtaining (120) at least one representation (3') of the at least one sample (3) in the frequency domain;
• obtaining (125) information (7) that is indicative at least of the type of the equipment (1);
• selecting (126), based on this information (7), one model (4a-4c) of the equipment (1) from a plurality of available models (4a-4c); and
• mapping (130), by means of the selected model (4a-4c), the at least one representation (3') to an operating state (5) of the equipment, wherein said operating state (5) comprises a normal state, an abnormal state, a fault, and/or a degradation state (5).

2. The method (100) of claim 1, wherein
• multiple pieces of equipment (1) within one single industrial plant are monitored;
• for mapping representations (3') of samples (3) obtained on a first non-empty subset of the pieces of equipment (1) to an operating state (5), a first model (4a-4c) is selected; and
• for mapping representations (3') of samples (3) obtained on a second non-empty subset of the pieces of equipment (1) to an operating state (5), a second model (4a-4c) is selected, wherein the second subset is disjoint from the first subset.

3. The method (100) of any one of claims 1 to 2, wherein the representation (3') comprises a compressed signature (3") of the sample (3).

4. The method (100) of claim 3, wherein the compressed signature (3") comprises:
• statistical parameters of the sample (3), and/or
• a breakdown of the overall spectral intensity of the sample (3) into intensities (I) of predetermined frequency bins (ω₁-ω₁₀).

5. The method (100) of any one of claims 3 to 4, wherein the model (4a-4c) of the equipment (1) comprises a collection of reference compressed signatures (3*) that are each stored in association with an operating state (5) of the equipment (1).

6. The method (100) of claim 5, wherein mapping (130) the at least one representation to the operating state (5) comprises:
• supplying (131) the compressed signature (3") from the representation (3') on the one hand, and at least one reference compressed signature (3*) stored in the model (4a-4c) on the other hand, to a distance measure and/or similarity measure; and
• in response to the outcome of the distance measure and/or similarity measure meeting a predetermined criterion (132), determining (133) the operating state (5) stored in the model (4a-4c) in association with the reference compressed signature (3*) as an operating state (5) of the equipment (1).

7. The method (100) of any one of claims 5 or 6, wherein at least one reference compressed signature (3*) is a cluster centroid obtained by unsupervised clustering of compressed signatures (3").

8. The method (100) of any one of claims 1 to 7, wherein a degradation state as an operating state (5) specifically comprises:
• deformation and/or partial loss of material of the equipment (1) or any part thereof; and/or
• buildup of material deposits on the equipment or any part thereof.

9. The method (100) of any one of claims 1 to 8, wherein mapping (130) the at least one representation (3') to the operating state (5) comprises:
• determining (134), from multiple representations (3') corresponding to samples (3) recorded at different times, a change (Δ) of the noise and/or vibration over time; and
• mapping (135), by means of the model (4a-4c), this change (Δ) to the operating state (5).

10. The method (100) of any one of claims 1 to 9, wherein the model (4a-4c) comprises at least one neural network that is configured map the representation (3'), and/or the change, to a classification that is indicative of the operating state (5).

11. The method of any one of claims 1 to 10, further comprising:
• determining (140), from an operating state (5b) obtained by the mapping (130) that is different from a predetermined normal state (5a), at least one remedial action (6) that, when performed on the equipment (1) that has this operating state (5) or on other equipment, is suitable to at least partially move the equipment (1) with the non-normal operating state (5b) to the predetermined normal operating state (5a), and/or inhibit a further degradation of this equipment (1); and
• causing (150) execution of this remedial action (6) on the equipment (1) with the non-normal operating state (5), respectively on the other equipment.

12. The method (100) of claim 11, wherein the remedial action (6) comprises one or more of:
• changing the rotational speed of the rotating member of the equipment (1) to a new value that eases a mechanical demand on the equipment (1); and/or
• actuating the other equipment to take over at least one action from the equipment (1) with the non-normal operating state (5).

13. The method (100) of claim 12, wherein the equipment (1) is a pump (10) in a set of parallel pumps.

14. The method (100) of claim 13, wherein the remedial action (6) specifically comprises: in response to a request to change the flow and/or the pressure of a medium that is output by the set of pumps, keeping the rotational speed of the pump (10) with the non-normal operating state (5) constant, and satisfying the request for the change of flow and/or pressure by changing the rotational speed of at least one other pump.

15. A method (200) for training a plurality of machine-learning models (4a-4c) for use in the method (100) of any one of claims 1 to 14, comprising the steps of:
• obtaining (210) representations (3'), in the frequency domain, of noise and/or vibration samples (3) generated by multiple pieces of equipment (1), wherein each piece of equipment (1) comprises at least one rotating member;
• obtaining (220), for each piece of equipment (1), information (7) that is indicative at least of a type of the equipment (1);
• assigning (230) each representation (3') to one to-be-trained machine-learning model (4a-4c) from a plurality of available models (4a-4c) according to this information (7);
• assigning (240), to each representation (3'), an operating state (5) of the equipment (1), wherein this operating state (5) comprises a normal state, an abnormal state, a fault, and/or a degradation state; and
• for each to-be-trained model (4a-4c), optimizing (260) parameters that characterize the behavior of this model (4a-4c) such that the model (4a-4c) maps representations (3') assigned to this model (4a-4c) to the respective operating states (5) assigned to these representations (3').

16. The method (200) of claim 15, wherein assigning (240) an operating state (5) to a representation (3') specifically comprises:
• clustering (241) the representations (3') into a plurality of clusters (8a-8c);
• assigning (242) different operating states (5) to different clusters (8a-8c); and
• assigning (243), to each representation (3'), the operating state (5) belonging to the cluster (8a-8c) of which this representation (3') is a member.

17. The method of claim 15, wherein assigning (240) an operating state (5) to a representation (3') specifically comprises:
• deriving (246), from the representations (3'), one single cluster (8);
• assigning (247), to the representations (3') that are members of this cluster (8), a normal operating state (5a); and
• assigning (248), to the representations (3') that are not members of this cluster (8), an abnormal operating state (5b).

18. The method of claim 15, wherein assigning (240) an operating state (5) to a representation (3') specifically comprises:
• providing (249) a trainable encoder (9a) that is configured to map representations (3') to latent codes in a latent space with reduced dimensionality;
• providing (250) a trainable decoder (9b) that is configured to reconstruct representations (3') from latent codes in the latent space;
• training (251), using a set of available representations (3'), the encoder (9a) and the decoder (9b) with the goal that, if representations (3') are first mapped to latent codes by the encoder (9a) and then reconstructed by the decoder (9b), the original representations (3') are reproduced;
• mapping (252a), with the trained encoder (9a*), a concrete representation (3') to a latent code, and reconstructing (252b), with the trained decoder (9b*), this representation (3');
• evaluating (253), according to a predetermined criterion, whether the reconstructed representation (3') matches the original concrete representation (3');
• if the reconstructed representation (3') matches the original concrete representation (3'), assigning (254), to this concrete representation (3'), a normal operating state (5a);
• if the reconstructed representation (3') does not match the original concrete representation (3'), assigning (255), to this concrete representation (3'), an abnormal operating state (5b).

19. The method (200) of any one of claims 14 to 18, wherein assigning (240) an operating state (5) to a representation (3') specifically comprises:
• determining (244), from an operating history of the equipment (1) on which the sample (3) condensed in the representation (3') was taken, an operating state (5) of the equipment (1); and
• assigning (245) this operating state (5) to the representation (3').

20. A computer program, comprising machine-readable instructions that, when executed on one or more computers, cause the one or more computers to perform the method (100, 200) of any one of claims 1 to 19.

21. A non-transitory machine-readable storage medium, and/or a download product, with the computer program of claim 20.

22. One or more computers with the computer program of claim 20, and/or with the non-transitory machine readable storage medium and/or download product of claim 21.
